# EUROPEAN PATENT APPLICATION

(11) **EP 1 873 785 A1**
(43) Date of publication of application: **02.01.2008**
(21) Application number: 07109598.8
(22) Date of filing: 05.06.2007
(51) Int. Cl.: G11B 27/34, G11B 27/11, H04N 7/24, G11B 19/02

(54) **Video reproducing apparatus, video reproducing method and video display system**

(30) Priority: 30.06.2006 JP 2006182455
(71) Applicant: Kabushiki Kaisha Toshiba, Minato-ku, Tokyo 105-8001 (JP)
(72) Inventor: Nomura, Katsuyuki Toshiba Corporation, Minato-ku, Tokyo 105-8001 (JP)
(74) Representative: Henkel, Feiler & Hänzel

(57) **Abstract**

According to one embodiment, a video reproducing apparatus (10) processing video content data and reproducing a video signal from the video content data includes a storage means (15) in which first display image data corresponding to a specific operation of a user is stored, an identification means (18) identifying whether or not second display image data corresponding to a specific operation of the user is included in the video content data, and a reproducing processing means (20) capable of performing first reproducing processing of reproducing a video signal in which the first display image data read from the storage means (15) is blended, when it is identified by the identification means (18) that the second display image data is included in the video content data.

## Description

### BACKGROUND

### 1. Field

One embodiment of the invention relates to a video reproducing apparatus reproducing a video signal from video content data, a video reproducing method, and a video display system using the video reproducing apparatus.

### 2. Description of the Related Art

Japanese Patent Application Publication (KOKAI) No. 2002-152641 (patent document 1) discloses a video reproducing apparatus according to a prior art. In the video reproducing apparatus of this document, OSD (On Screen Display) image data for OSD image, which is created in advance, is stored in an OSD image memory. The video reproducing apparatus acquires the OSD image data corresponding to operation content information (a button number, a button region, a button command and the like), which is obtained by reproducing a DVD disk, from the OSD image memory, and displays the OSD image based on the OSD image data as well as the operation buttons specified by the operation content information.

### SUMMARY OF THE INVENTION

The HD-DVD (High Definition Digital Versatile Disc) standards ready for high definition televisions are the standards which allow the video contents to specify the user interface relating to reproduction control individually. Namely, the video reproducing apparatus is set so that when the data which specifies the OSD image is included in the video content data, the video reproducing apparatus displays this OSD image in response to a specific operation by a user. Meanwhile, in the video reproducing apparatus, an OSD image peculiar to the video reproducing apparatus is stored in advance, and when the data which specifies the OSD image is not included in the video content data, the OSD image peculiar to the video reproducing apparatus is displayed as in the conventional apparatuses.

With the above described display method of an OSD image, the OSD image displayed on the display differs depending on whether or not the data which specifies the OSD image is included in the video content data. Depending on the operation content of the specific operation by a user, the OSD image corresponding to the operation content is not included in the OSD image specified in the video contents, and with respect to such an operation content, the OSD image is not displayed. When the OSD image differs depending on the kind of the video contents as described above, or the OSD image is not displayed, the video reproducing apparatus becomes difficult for a user to handle.

The present invention is made to solve the above described problem, and has an object to provide a video reproducing apparatus which is easy for a user to handle irrespective of the kind of video contents, a video reproducing method and a video display system.

In order to attain the above described object, a video reproducing apparatus according to the present invention is a video reproducing apparatus processing video content data and reproducing a video signal from the video content data, and is characterized by including a storage means in which first display image data corresponding to a specific operation of a user is stored, an identification means identifying whether or not second display image data corresponding to a specific operation of the user is included in the video content data, and a reproducing processing means capable of performing first reproducing processing of reproducing a video signal in which the first display image data read from the storage means is blended, when it is identified by the identification means that the second display image data is included in the video content data.

A video display system is a video display system including a transmission apparatus transmitting video content data, a video reproducing apparatus receiving the video content data transmitted from the transmission apparatus and reproducing a video signal from the video content data, and a video display apparatus capturing the video signal and displaying video, and characterized in that the video reproducing apparatus includes a storage means in which first display image data corresponding to a specific operation of a user is stored, an identification means identifying whether or not second display image data corresponding to a specific operation of the user is included in the video content data, and a reproducing processing means capable of performing first reproducing processing of reproducing a video signal in which the first display image data read from the storage means is blended, when it is identified by the identifying means that the second display image data is included in the video content data.

A video reproducing method is a video reproducing method for processing video content data and reproducing a video signal from the video content data, and is characterized in that a storage means in which first display image data corresponding to a specific operation of a user is stored is provided, and the method is characterized by including identifying whether or not second display image data corresponding to a specific operation of the user is included in the video content data, and reproducing a video signal in which the first display image data read from the storage means is blended, when it is identified that the second display image data is included in the video content data.

According to the above described video reproducing apparatus, video display system and video reproducing method, even when it is identified that the second display image data is included in the video content data, the video signal in which the first display image is blended can be produced in response to the specific operation of the user. Therefore, without depending on the kind of the video content data, a common screen display is provided to the user in response to the specific operation of the user and the video reproducing apparatus can be made easy for the user to handle.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.
FIG. 1 is a block diagram showing a video display system according to an embodiment of the invention;
FIG. 2 is a view showing an example of an OSD image displayed on a display;
FIG. 3 is a view showing an example of a selection screen for selecting the OSD image;
FIG. 4 is a flowchart showing OSD reproducing processing of a video reproducing apparatus;
FIG. 5 is a flowchart showing a modified example of the OSD reproducing processing of the video reproducing apparatus; and
FIG. 6 is a view showing a modified example of the selection screen for selecting the OSD image.

### DETAILED DESCRIPTION

Various embodiments according to the invention will be described hereinafter with reference to the accompanying drawings.

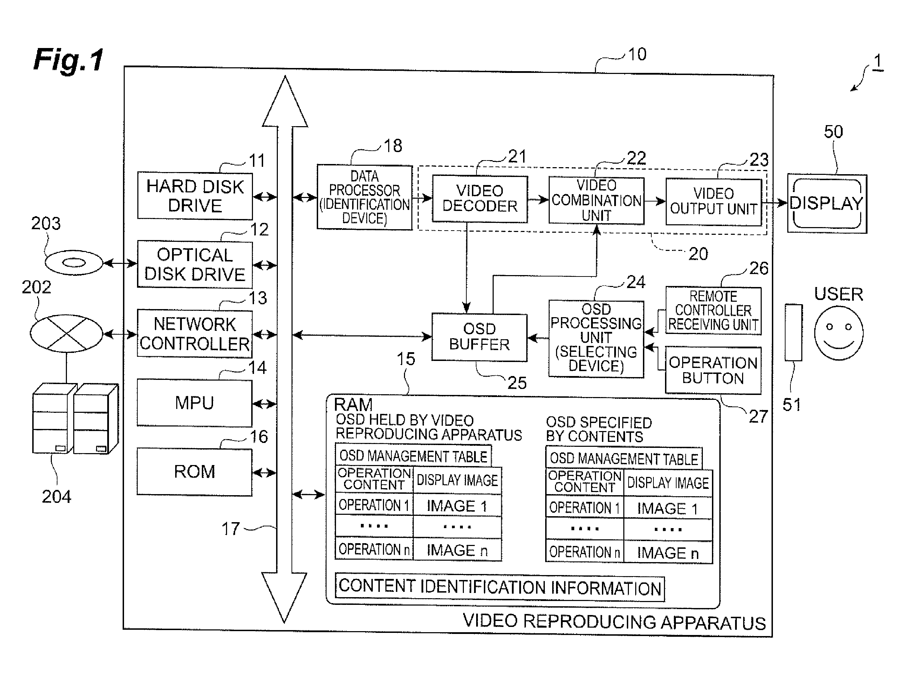

FIG. 1 is an exemplary block diagram showing a video display system 1 according to the embodiment. In the video display system 1 shown in FIG. 1, a video reproducing apparatus 10 can capture video content data (for example, program data of a movie, a drama and the like) from a network storage and can display the video reproduced from the video content data on a display 50 which is a video display apparatus. The video reproducing apparatus 10 can also read video content data from a recording medium such as an optical disk, and display the video reproduced from the video content data on the display 50.

The video reproducing apparatus 10 includes a hard disk drive 11, an optical disk drive 12 and a network controller 13. The hard disk drive 11 reads and writes digital data such as video content data from and to a magnetic disk rotating at a high speed. The optical disk drive 12 reads digital data such as video content data from an optical disk and outputs it. The network controller 13 performs processing for capturing digital data such as video content data from a network storage 204 which is a transmission apparatus through a public network such as the Internet 202. The hard disk drive 11, the optical disk drive 12 and the network controller 13 are connected to a bus 17, and transmit video content data to a data processor 18 through the bus 17.

The video reproducing apparatus 10 also includes an MPU 14 (Micro Processing Unit), a RAM 15 (Random Access Memory) and a ROM 16 (Read Only Memory). The MPU 14 instructs the data processor 18 to reproduce video and sound by using the video content data read from any of the optical disk 203, the network storage 204 and the hard disk drive 11. Data and a program used when the MPU 14 is operated are temporarily stored in the RAM 15. The ROM 16 stores programs executed by the MPU 14 such as a boot program, a player program and an OSD processing program, and standard OSD image data peculiar to the video reproducing apparatus 10. The MPU 14, the RAM 15 and the ROM 16 are connected to the bus 17.

In this case, the OSD image means the image which is displayed on the display 50 when a user performs a specific operation by using a remote controller 51 and an operation button 27 of the apparatus main body. The OSD images include a first OSD image which is standard and stored in the ROM 16, and a second OSD image specified by the video content data. The standard first OSD image is used by being transferred to the RAM 15 from the ROM 16 when the video is displayed on the display 50. The second OSD image which is specified by the video content data is extracted from the video content data, thereafter is stored in the RAM 15 and used.

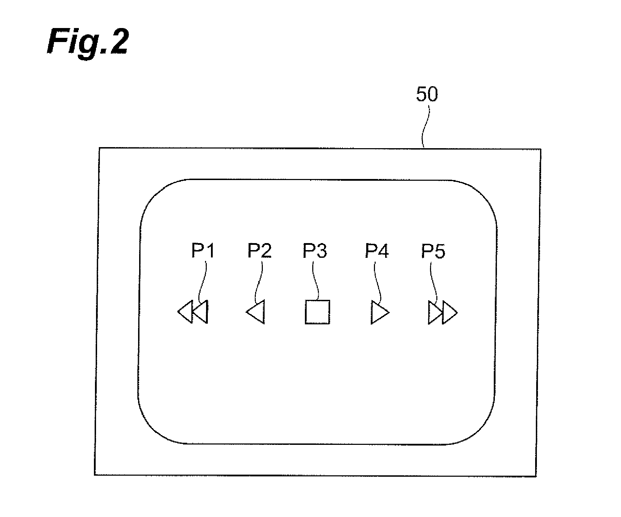

The first OSD image and the second OSD image are stored in the RAM 15 as an OSD management table. Namely, the OSD management table prepares OSD images, which are different images, in correspondence to a plurality of operation contents respectively. For example, as shown in FIG. 2, the OSD management table prepares the images of a symbol P1, a symbol P2, a symbol P3, a symbol P4 and a symbol P5 in correspondence to the respective operations of a skip button to the previous index, a fast-reversing button, a stop button, a fast-forwarding button, a skip button to the next index. The kinds of the OSD images are not limited to them, and various images can be prepared in correspondence to various specific operations of a user.

Further, the video reproducing apparatus 10 also includes the data processor 18. After the data processor 18 captures the video content data through the bus 17, it reads content identification information included in a header of the video content data, recognizes the type of the video content, and stores the content identification information in the RAM 15. Further, the data processor 18 separates coded video data from the video content data, and then supplies the coded video data to a video decoder 21. Further, the data processor 18 separates coded sound data from the video content data, and then supplies the coded sound data to a sound decoder (not shown) .

The video reproducing apparatus 10 also includes a video decoder 21, a video combination unit 22 and a video output unit 23. The video decoder 21 decodes the coded video data supplied from the data processor 18 to convert it into video data, and supplies the video data to the video combination unit 22. The video combination unit 22 performs combining processing of the video data supplied from the video decoder 21 to generate combined video data, and supplies the generated combined video data to the video output unit 23. The video output unit 23 outputs a video output signal corresponding to the combined video data which is supplied. The video decoder 21, the video combination unit 22 and the video output unit 23 take charge of a reproducing processing means 20. The video reproducing apparatus 10 also includes a sound decoder (not shown) which decodes coded sound data, and a sound output unit (not shown) which outputs a sound output signal corresponding to the sound data.

The video reproducing apparatus 10 includes an OSD processing unit 24 and an OSD display buffer 25. In order to facilitate understanding, FIG. 1 shows the OSD processing unit 24, but the OSD processing unit 24 is configured to be realized by the MPU 14 executing the OSD processing program.

When the video content data includes second OSD image data, the video decoder 21 captures the coded data of the second OSD image from the data processor 18, then decodes the coded data of the second OSD image and thereafter, temporarily stores the second OSD image data in the OSD display buffer 25. The second OSD image data stored in the OSD display buffer 25 is transmitted to the RAM 15 through the bus 17 and stored therein. The second OSD image data thus stored in the RAM 15 is used when a user performs a specific operation afterwards.

When the operation of the remote controller 51 by a user coincides with any of the specific operations of the OSD management table, the OSD processing unit 24 outputs the command for displaying the first OSD image or the second OSD image on the display 50. On receiving the command of the OSD processing unit 24, the OSD image data corresponding to the specific operation coinciding with the user's operation is supplied to the OSD display buffer 25 from the RAM 15, and the OSD image is further supplied to the video combination unit 22 from the OSD display buffer 25. The video combination unit 22 performs processing of blending the OSD image into the video reproduced from the video content data, and supplies the generated combined video data to the video output unit 23. In this case, the processing of combining the first OSD image into the video reproduced from the video content data and reproducing it is first reproducing processing, and the processing combining the second OSD image into the video reproduced from the video content data and reproducing it is second reproducing processing.

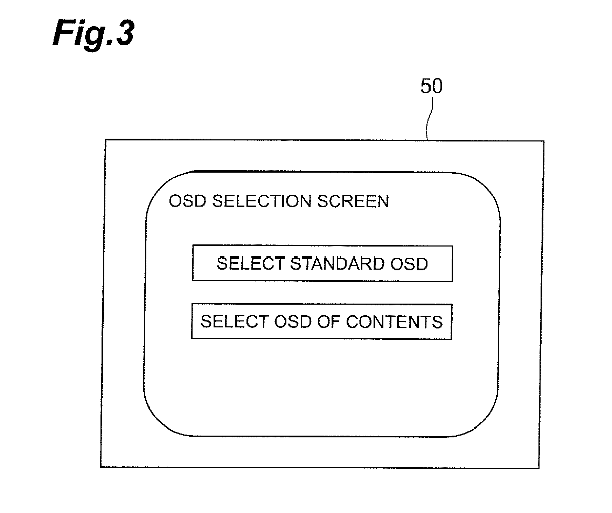

Further, the OSD processing unit 24 provides the function of selecting one of the first OSD image peculiar to the video reproducing apparatus 10 and the second OSD image specified by the video content data to a user. Namely, when the OSD processing unit 24 supplies selection screen data of the OSD image to the OSD display buffer 25 in response to the operation of the remote controller 51 by the user, the selection screen data is supplied to the video combination unit 22 from the OSD display buffer 25. The video combination unit 22 supplies the video data of the selection screen to the video output unit 23. FIG. 3 shows an example of the selection screen of the OSD image. When any one of "SELECT STANDARD OSD" and "SELECT OSD OF CONTENT" on the selection screen is selected by the operation of the remote controller 51 by the user, the OSD processing unit 24 captures an OSD selection signal and holds it.

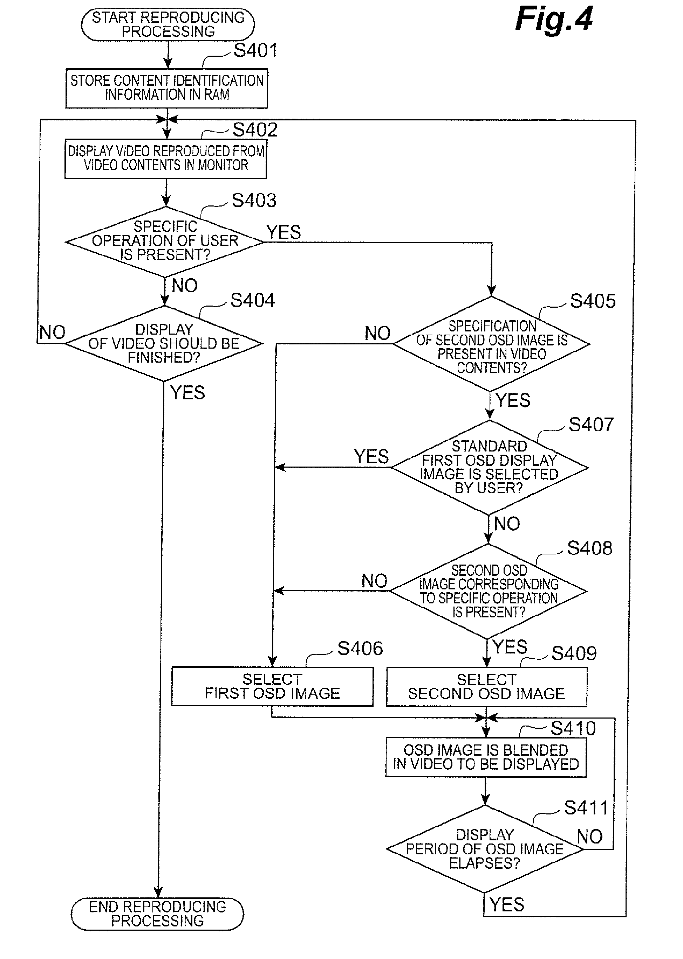

Next, OSD reproducing processing by the video reproducing apparatus 10 will be described. FIG. 4 shows a flowchart of the OSD reproducing processing by the video reproducing apparatus 10.

When the video reproducing apparatus 10 starts reproducing processing of the video contents, the data processor 18 extracts content identification information from the header of video content data, and the extracted content identification information is stored in the RAM 15 (S401) . Next, the reproducing processing means 20 reproduces video from the video content data, and the reproduced video is displayed on the display 50 (S402).

When the remote controller 51 is operated by a user, the OSD processing unit 24 captures an operation signal through a remote controller receiving unit 26, and determines whether or not the operation of the remote controller 51 by the user corresponds to the specific operation to display the OSD image (S403). When the OSD processing unit 24 determines that the operation by the user does not correspond to the specific operation here, the video which is reproduced normally continues to be displayed on the display 50 until it comes under the situation where display of the video should be stopped (S404). When the OSD processing unit 24 determines that the operation by the user corresponds to the specific operation, the flow goes to the processing in S405.

In S405, the OSD processing unit 24 refers to the content identification information, and determines whether or not the second OSD image is specified by the video contents (S405). When the OSD processing unit 24 determines that the second OSD image is not specified by the video contents here, the OSD processing unit 24 selects the first OSD image stored in the ROM 16, and supplies the first OSD image data to the OSD display buffer 25 (S406). When the OSD processing unit 24 determines that the second OSD image is specified by the video contents, the flow goes to S407.

In S407, the OSD processing unit 24 determines whether or not the first OSD image is selected by the user (S407). When the OSD processing unit 24 determines that the first OSD image is selected by the user, the OSD processing unit 24 selects the first OSD image and supplies the first OSD image data to the OSD display buffer 25 (S406). When the OSD processing unit 24 determines that the first OSD image is not selected by the user, the flow goes to S408. Selection of one of the first OSD image and the second OSD image by the user is performed by using the selection screen shown in FIG. 3. In this manner, in the embodiment, any one of the first OSD image and the second OSD image can be selected by one operation, and therefore, the display screen corresponding to the preference of a user can be provided.

In S408, the OSD processing unit 24 determines whether or not the second OSD image corresponding to the specific operation of the user is present or not (S408). When the OSD processing unit 24 determines that the second OSD image corresponding to the specific operation of the user is not present here, the OSD processing unit 24 selects the first OSD image, and supplies the first OSD image data to the OSD display buffer 25 (S406). In this manner, in the embodiment, even when the second OSD image data corresponding to one operation content of the specific operation of the user is not present, the first OSD image data corresponding to one operation content of the specific operation is blended in the video and displayed, and therefore, the situation where the OSD image is not displayed in response to the specific operation of the user can be avoided.

When the OSD processing unit 24 determines that the second OSD image corresponding to the specific operation of the user is present in S408, the flow goes to the processing in S409. In S409, the OSD processing unit 24 selects the second OSD image and supplies the second OSD image data to the OSD display buffer 25 (S409) . When the OSD image data is supplied to the OSD display buffer 25 in S406 or S409, the OSD image is blended in the image by the video combination unit 22, and the combined image is displayed on the display 50 (S410).

The OSD display buffer 25 continues to supply the OSD image data to the video combination unit 22 until the display period of the OSD image which is set in advance elapses (S411). Therefore, until the display period set in advance elapses, the combined image with the OSD image blended into the image is displayed on the display 50. When the display period set in advance elapses, the ordinary image reproduced from the video contents is displayed on the display 50 (5402).

According to the embodiment described above, it is determined which one of the first OSD image and the second OSD image is selected by the user (S407) . When the second OSD image is selected by the user, it is determined whether the second OSD image corresponding to one operation content of the specific operation performed by the user is present or not (S408). Therefore, by making it possible to select any one of the first OSD image and the second OSD image by one operation, the display screen corresponding to the preference of the user can be provided. Especially when the first OSD image is selected, the first OSD image is preferentially displayed, and therefore, the display screen which is not dependent on the kind of the video content data can be provided.

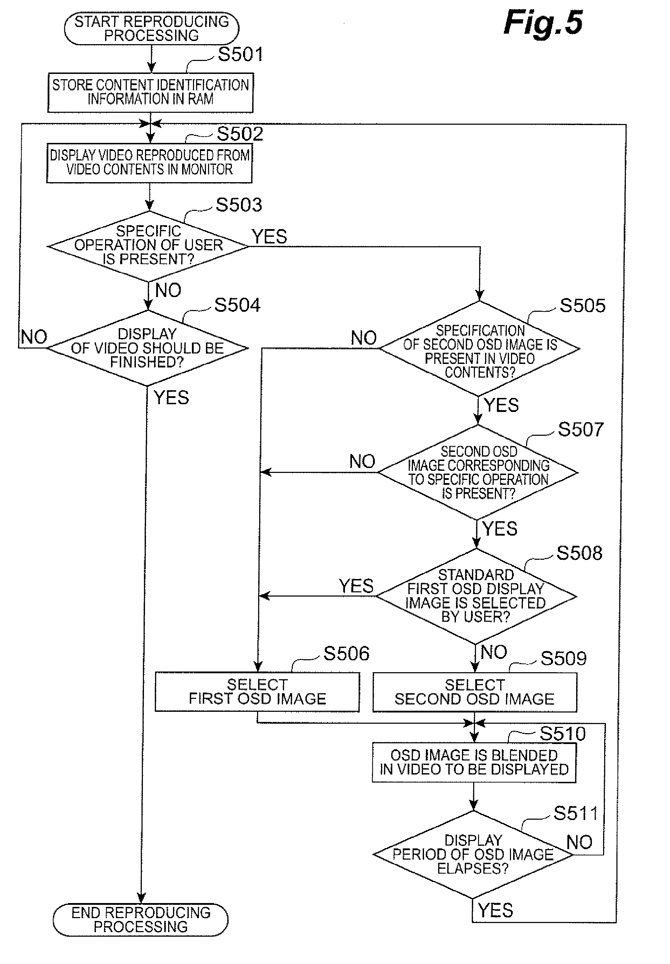

Next, a modified example of the OSD reproducing processing by the video reproducing apparatus 10 will be described. FIG. 5 shows a flowchart of the modified example of the OSD reproducing processing by the video reproducing apparatus 10. The flowchart in FIG. 5 differs from the flowchart in FIG. 4 in the respect that S507 and 8508 are carried out instead of S407 and S408 of the flowchart in FIG. 4. Hereinafter, S507 and S5C8 will be mainly described.

In S507, the OSD processing unit 24 determines whether or not the second OSD image corresponding to the specific operation of the user is present (S507). When the OSD processing unit 24 determines that the second OSD image corresponding to the specific operation of the user is not present, the OSD processing unit 24 selects the first OSD image and supplies the first OSD image data to the OSD display buffer 25 (S506). In this manner, in the embodiment, even when the second display image data corresponding to one operation content of the specific operation of the user is not present, the first display image data corresponding to one operation content of the specific operation is blended in the video, and displayed, and therefore, the situation where the display image is not displayed in response to the specific operation of the user can be avoided.

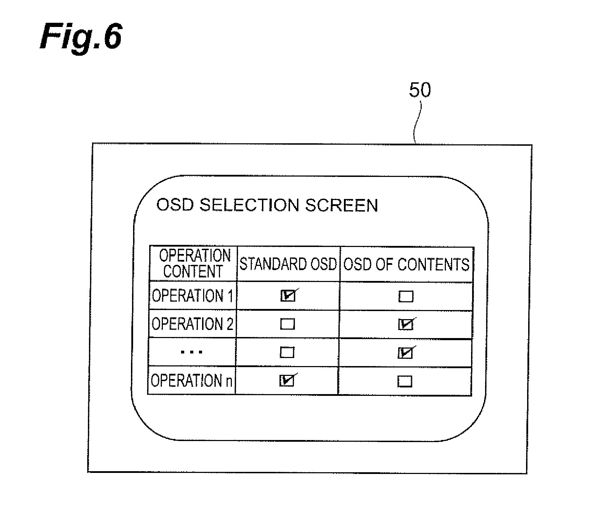

When the OSD processing unit 24 determines that the second OSD image corresponding to the specific operation of the user is present in S507, the flow goes to the processing in S508. In S508, the OSD processing unit 24 determines whether or not the first OSD image is selected with respect to one operation content of the specific operation performed by the user (S508). When the OSD processing unit 24 determines here that the first OSD image is selected by the user, the OSD processing unit 24 selects the first OSD image and supplies the first OSD image data to the OSD display buffer 25 (S506). When the OSD processing unit 24 determines that the first OSD image is not selected by the user on the other hand, it selects the second OSD image and supplies the second OSD image data to the OSD display buffer 25 (S509). Selection of one of the first OSD image and the second OSD image by the user is performed by using the selection screen shown in FIG. 6. In the selection screen in FIG. 6, any one of the first OSD image and the second OSD image can be selected with respect to each of the operation contents of the specific operation of the user.

According to the OSD reproducing processing according to the modified example described above, it is determined whether or not the second OSD image corresponding to one operation content of the specific operation of the user is present (S507) . When the second OSD image corresponding to the one operation content of the specific operation of the user is present, it is determined which one of the first OSD image and the second OSD image is selected with respect to the one operation content of the specific operation (S508). Therefore, by making any one of the first OSD image and the second OSD image selectable for each operation content of the specific operation of the user, the display screen more corresponding to the user's preference can be provided. Especially when the first OSD image is selected, the first OSD image is preferentially displayed, and therefore, the display screen which is not dependent on the kind of the video content data can be provided.

The video display system described above is mainly targeted for those in conformity with the HD-DVD standards, but the present invention is not limited to this. For example, the present invention may be applied as the application of the video display system in conformity with the ordinary DVD standards, and the present invention may also be applied to the other kinds of video display systems such as those in conformity with the Blu-ray Disc standards and the like.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A video reproducing apparatus (10) processing video content data and reproducing a video signal from the video content data, comprising:
a storage means (15) in which first display image data corresponding to a specific operation of a user is stored;
an identification means (18) identifying whether or not second display image data corresponding to a specific operation of the user is included in the video content data; and
a reproducing processing means (20) capable of performing first reproducing processing of reproducing a video signal in which the first display image data read from said storage means (15) is blended, when it is identified by said identification means (18) that the second display image data is included in the video content data.

2. The video reproducing apparatus (10) according to claim 1, further comprising:
a selecting means (24) which allows the user to select any one of the first display image data and the second display image data,
wherein said reproducing processing means (20) performs the first reproducing processing of reproducing the video signal in which the first display image data is blended in response to a specific operation of the user, when the first display image data is selected by the user, and performs second reproducing processing of reproducing a video signal in which the second display image data is blended in response to a specific operation of the user, when the second display image data is selected by the user.

3. The video reproducing apparatus (10) according to claim 2,
wherein said selecting means (24) is a screen display which urges the user to select any one of the first display image data and the second display image data.

4. The video reproducing apparatus (10) according to claim 3,
wherein said selecting means (24) is a screen display which urges the user to select any one of the first display image data and the second display image data for each operation content of the specific operation of the user.

5. The video reproducing apparatus (24) according to claim 2,
wherein said reproducing processing means (20) performs the first reproducing processing of reproducing the video signal in which the first display image data is blended in response to the specific operation of the user, when the second display image data is selected but the second display image data corresponding to the specific operation of the user is not present.

6. The video reproducing apparatus (10) according to claim 2,
wherein said reproducing processing means (20) performs the first reproducing processing of reproducing the video signal in which the first display image data is blended in response to the specific operation of the user, when the second display image data corresponding to the specific operation of the user is present but the second display image data is not selected.

7. The video reproducing apparatus (10) according to claim 1,
wherein the specific operation of the user is a skip operation to a previous index, a fast-reversing operation, a stop operation, a fast-forwarding operation or a skip operation to a next index.

8. A video display system 1 comprising a transmission apparatus (204) transmitting video content data, a video reproducing apparatus (10) receiving the video content data transmitted from said transmission apparatus (204) and reproducing a video signal from the video content data, and a video display apparatus (50) capturing the video signal and displaying video,
wherein said video reproducing apparatus (10) comprises
a storage means (15) in which first display image data corresponding to a specific operation of a user is stored;
an identification means (18) identifying whether or not second display image data corresponding to a specific operation of the user is included in the video content data; and
a reproducing processing means (20) capable of performing first reproducing processing of reproducing a video signal in which the first display image data read from said storage means (15) is blended, when it is identified by said identification means (18) that the second display image data is included in the video content data.

9. A video reproducing method for processing video content data and reproducing a video signal from the video content data,
wherein a storage means (15) in which first display image data corresponding to a specific operation of a user is stored is provided,
said method comprising
identifying whether or not second display image data corresponding to a specific operation of the user is included in the video content data; and
reproducing a video signal in which the first display image data read from the storage means (15) is blended, when it is identified that the second display image data is included in the video content data.
